(19) Europäisches Patentamt

European Patent Office

Office européen des brevets

(11) Publication number : **0 333 290 B1**

(12) **EUROPEAN PATENT SPECIFICATION**

(45) Date of publication of patent specification :
25.11.92 Bulletin 92/48

(51) Int. Cl.⁵ : **G08B 17/10,** G01M 3/28

(21) Application number : **89200644.6**

(22) Date of filing : **15.02.89**

(54) **Device for monitoring the suction vent duct(s) of a smoke/gas detection system.**

(30) Priority : **15.03.88 NL 8800634**

(43) Date of publication of application :
**20.09.89 Bulletin 89/38**

(45) Publication of the grant of the patent :
**25.11.92 Bulletin 92/48**

(84) Designated Contracting States :
**AT BE CH DE ES FR GB GR IT LI LU NL SE**

(56) References cited :
**DE-A- 2 755 743
FR-A- 2 276 577
FR-A- 2 551 215
NL-A- 8 104 604**

(73) Proprietor : **WESTINGHOUSE
ELECTROTECHNIEK EN INSTRUMENTATIE
B.V.
Wattstraat 40
NL-2723 RC Zoetermeer (NL)**

(72) Inventor : **Labout, Whilhelmus Alphonsus
Maria
Hezer-Enghweg 108
Den Dolder (NL)**

(74) Representative : **Lips, Hendrik Jan George, Ir.
et al
HAAGSCH OCTROOIBUREAU Breitnerlaan
146
NL-2596 HG Den Haag (NL)**

Jouve, 18, rue Saint-Denis, 75001 PARIS

## Description

The invention relates to a device for monitoring the suction vent duct(s) of a smoke/gas detection system.

With usual smoke/gas detection systems a plurality of measuring points are monitored by means of a suction vent duct which, in these measuring points, sucks air toward a measuring detector connected at the beginning of the suction duct, which detector in case of a starting fire in the vicinity of one of the measuring points detects smoke or another developing gas, for instance carbon dioxyde and issues a signal which is handled by a suitable electronic circuit to an alarm signal. Smoke/gas detection systems exist in which detection occurs by means of a reaction gas. From the Dutch patent application 81 04604 for instance a fire detection system is known, in which at the end of the suction duct system a source of ammonia is connected so that during the suction of a suction duct always ammonia passes through the suction duct. The device is especially intended for the detection of development of HCl, which is formed with a starting fire of the polyvinyl chloride insulation of electric cables. In case such a development occurs, the detector detects the presence of the ammonia chloride formed with the reaction.

With all such systems it is essential that the suction functions correctly. Therefore it is important that rupture or clogging of the duct is determined and repaired as soon as possible.

Known methods for monitoring suction ducts consists in measuring the quantity or through put through the duct and the related pressure.

Pressure can be measured with pressure sensors, equipped with switches or transmitters. A disadvantage of pressure measuring is that with often very long suction ducts, which show a small pressure drop only, most pressure sensors are not sufficiently sensitive to measure pressure variations in case a duct breach occurs in the middle or at the end of the duct. If applicable one has to do with a cost problem because a highly sensitive sensor and the electronic circuit necessary for it will increase costs considerably for the concerned smoke/gas detection system.

For monitoring the suction duct by means of measuring the through-put wherewith the flow varies in case of duct breach or clogging, one may use flow rate meters, thermic quantity meters and acoustical quantity meters.

The objection to flow rate meters, especially flow rate meters with floats is, that they cause a remaining pressure loss which is disturbing for the detection system, especially with long ducts.

Thermic quantity meters are based on the principle that a temperature sensitive element is influenced by the air/gas quantity flowing along it. Such a temperature element can for instance be a PT-element, a thermo couple, a thermistor, or a transistor. From the French patent specification 2 551 215 a device is known for monitoring the velocity of a gas flow in a duct wherewith use is made of suchlike temperature elements. A drawback is here, that the element needs to be very sensitive and consequently relatively expensive, especially with long ducts.

The acoustical quantity meters work according to the travelling time principle of sound vibrations over the length of the duct, but have the disadvantage that a very complex and expensive circuit is necessary.

Now it is an object of the invention to provide a device for monitoring the suction duct(s) of a smoke/gas detection system, which functions effectively and reliably regardless the length of the duct to be monitored and therewith is relatively cheap to realize or apply and consequently does not form a strongly costs engraving factor for the system to be monitored.

The device according the invention for that reason is characterized by
- a reaction agent gas or vapour source, connected to the end of the suction duct(s),
- a reaction agent sensitive sensor, connected to the beginning of the suction duct(s), which in dependence on the measured concentration of the reactive agent issues an electrical signal, and
- a signal handling circuit, connected to the sensor, and a first comparator, which compares the output of an amplifier with an alarm reference signal and,with exceeding of a predetermined threshold,issues an alarm signal.

According the invention the reactive agent gas, connected to the end of the suction duct is permamently sucked through the duct and the concentration at the beginning of the duct is measured by the sensor and transduced to an electrical signal. Because concentration measurements are relatively sensitive, in this way an accurate detection may occur over the total length of a suction duct. In case of duct breach the concentration will show a significant decrease, whereas in case of clogging of the duct no reactive agent will pass through, so that this easily can be detected. With such a concentration measuring sensor a relatively simple signal handling circuit can be used, the activity of which is based on comparison of the incoming signals with standard signals for normal conditions. If an alarm signal is issued this may serve as well the purpose of switching in of a separate alarm circuit as for causing alarm lamps to light.

Effectively the realisation may be such that the signal handling circuit contains a compensation circuit which compares the output of the amplifier with a reference signal, which is based on normal suction conditions for air and reactive agent and in dependence on this comparison issues a compensation signal to the control input of the amplifier. By always adjusting the amplification on hand of the reference, one attains that fluctuations in the duct system, which per se do not mean a serious disturbance, easily can be compensated. Therewith it is preferred that the compensation signal is switched off when the amplifier output exceeds a predetermined threshold. This is desired for preventing that in case of a partly disturbance of the duct which, however, is sufficiently serious to be remedied, the amplifier will not adjust the signal to normal.

With long activity of the monitoring device finally the reactor agent store, c.q. the reactive agent source, connected to the end of the suction duct, will be exhausted and issue too little reactive agent for a good measurement. According to invention it is possible also here to provide a monitoring with relatively simple means. Herefore the invention provides that the signal handling circuit contains a second comparator which compares the output of the amplifier with a reactive agent reference signal and with exceeding of a predetermined threshold issues an alarm signal for too low reactive agent concentration. If the compensation circuit cannot further sufficiently compensate for a reactive agent concentration which becomes too low, this will be determined by the reference in the second comparator, after which the issued alarm signal switches in an alarm circuit c.q. an alarm light.

Though diverse possibilities exist for concentration determining gas sensors according the invention, preferably use is made of a gas sensitive semiconductor element, provided with a heating element, connected to a heating control. Suchlike semiconductor elements are known, for instance a n-type semi-conductor, consisting of $SnO_2$, which when heated is capable to detect gases by an increase of the electrical conductivity by gas absorption at the sensor surface. Suchlike semi-conductor elements react very sensitively.

With such an embodiment the signal handling circuit effectively may have further a temperature compensation circuit connected to the amplifier for compensating temperature variations of the semiconductor element. In this way it is prevented that an unexpected temperature variation could cause an alarm.

As reactive agent gas several possibilities exist. With the invention preferably use is made of ammonia gas as reactive agent. This gas can easily be detected in several ways due to its reactivity and moreover is relatively cheap. Another advantage of ammonia gas is that it is also used with certain smoke/gas detection system as reactive agent gas for detecting of a gas developed with a fire start. In the earlier mentioned Dutch patent application 81 04604 ammonia gas is used to detect developing HCl-vapour, which arises with heating of PVC-cover. Especially effective to suchlike smoke/gas detection can be combined with a monitoring device according to the invention, wherewith for monitoring the suction duct use is made of the same reactive agent which also is used for the smoke/gas detection.

The invention will further be elucidated on hand of an embodiment with reference to the drawing. In the drawing shows:

Fig. 1 a principal scheme of a known smoke/gas detection system,

Fig. 2 the same system, schematically indicated and provided with a monitoring device according the invention,

Fig. 3 in greater detail the mounting of the gas sensor, and

Fig. 4 a block scheme of the signal handling circuit which is used therewith.

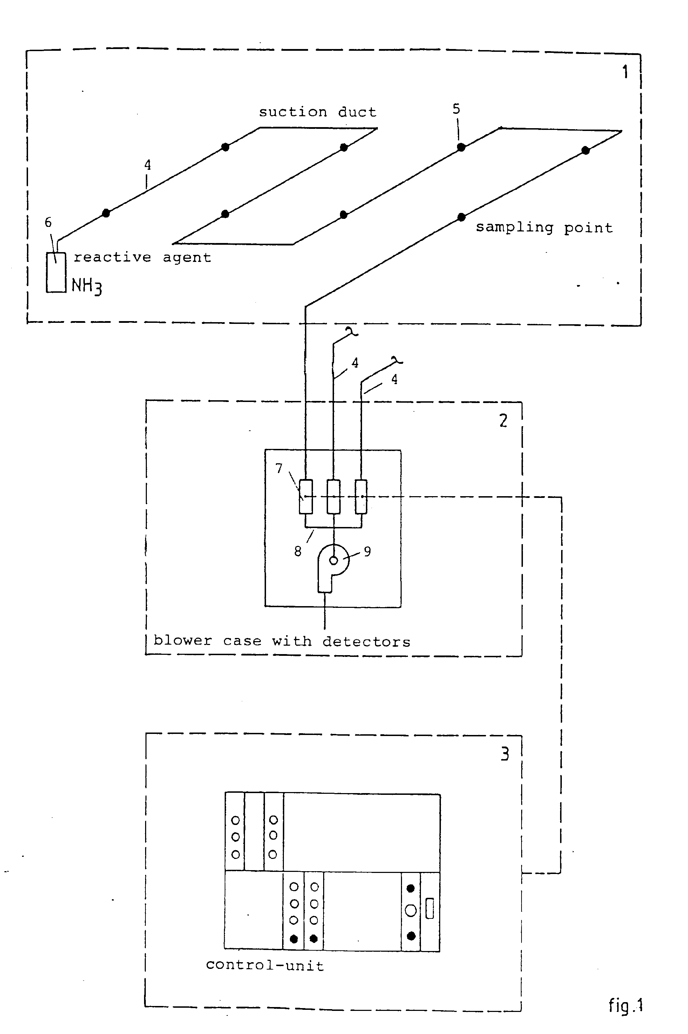

In Fig. 1 a known smoke/detection system has been shown. This consists in a suction system 1, a blower case 2, and a control unit 3.

The suction system contains a suction duct 4, which contains a plurality of sampling points 5. At the end of the suction duct 4 a source of reactive agent 6 has been connected which contains the reactive agent ammonia. A number of suchlike suction systems 1, of which only one has been shown, are connected to the blower case 2. In the blower case detectors 7 are present at the beginning of the respective suction ducts 4 with there beyond a manifold 8 to which a blower 9 is connected, which is common for the suction ducts. The detectors 7 are connected to the control unit 3, which contains a signal handling circuit (not shown) and a indicator and control panel.

The system described in the above is especially intended for detecting a fire start with polyvinyl chloride (PVC) insulators of electrical conductors and suchlike. As is known PVC issues HCl-vapours with overheating or start of a fire, which via sample points 5 are sucked into the suction duct 4 and react with the present ammonia forming a $NH_4Cl$ mist, which is detected by the detectors 7.

In order to have such a system functioning reliably it is necessary that the suction ducts which may have a duct length of 15-20 meter or more, with a diameter of 20-25 mm, are monitored for defects such as duct breach or clogging. In case of a duct breach the downflow sampling points are completely put out of action, whereas further there will be sucked in too less $NH_3$-reactive agent. For this reason an effective monitoring of the suction duct is necessary.

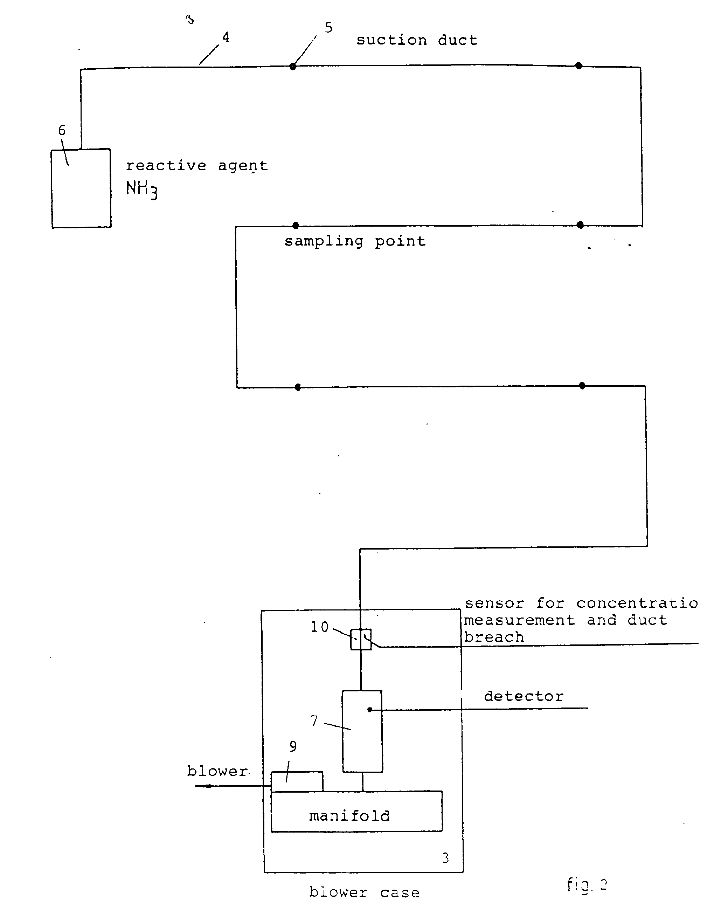

In Fig. 2 the suction system of Fig. 1 has schematically been shown wherewith, however, in the blower case 2 at the beginning of the suction duct 4 moreover a $NH_3$-gas sensitive sensor 10 has been connected, which issues an electrical signal which is dependent on the $NH_3$-gas concentration in the duct. In case of duct breach or clogging of the duct this concentration will change abruptly and the change of the electrical signal will be determined and evaluated by a signal handling circuit in which the inputted sensor signals are compared to reference signals and possible alarm signals are issued in dependence on this comparison.

Effectively the invention uses a present force of reactive agent which also is used already for the smoke/gas detection system itself and which now also serves the purpose as an auxiliary means for monitoring the suction duct with respect to breach, clogging, and so on.

The used sensor is of a n-type semi-conductor which mainly consists of $SnO_2$, when heated capable to detect a gas concentration by increase of the electrical conductivity by absorption of this gas. In view of a sufficient sensitivity it is therewith necessary that the semi-conductor is heated. A suchlike sensor is known and consists of a ceramic tube, covered with a semi-conductor material and inwardly provided with a heating coil.

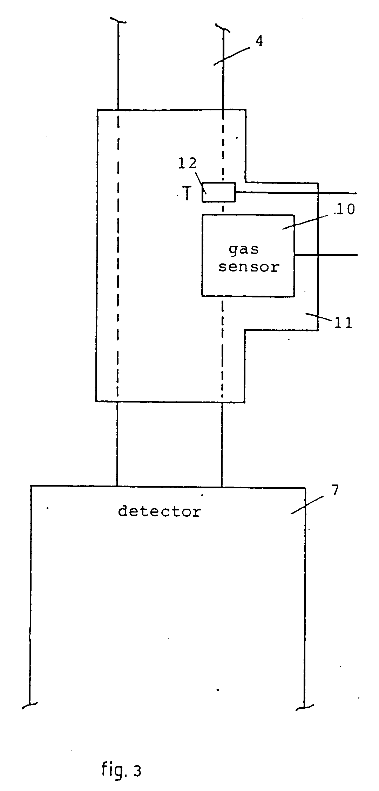

The actual mounting of this gas sensor 10 has been shown in Fig. 3. As is visible the gas sensor 10 has been located in a T-shaped member 11, which short above the detector 7 is connected to the beginning of the suction duct 4. Near the gas sensor 10 a temperature element 12 has been mounted to determine variations in the temperature and compensate them.

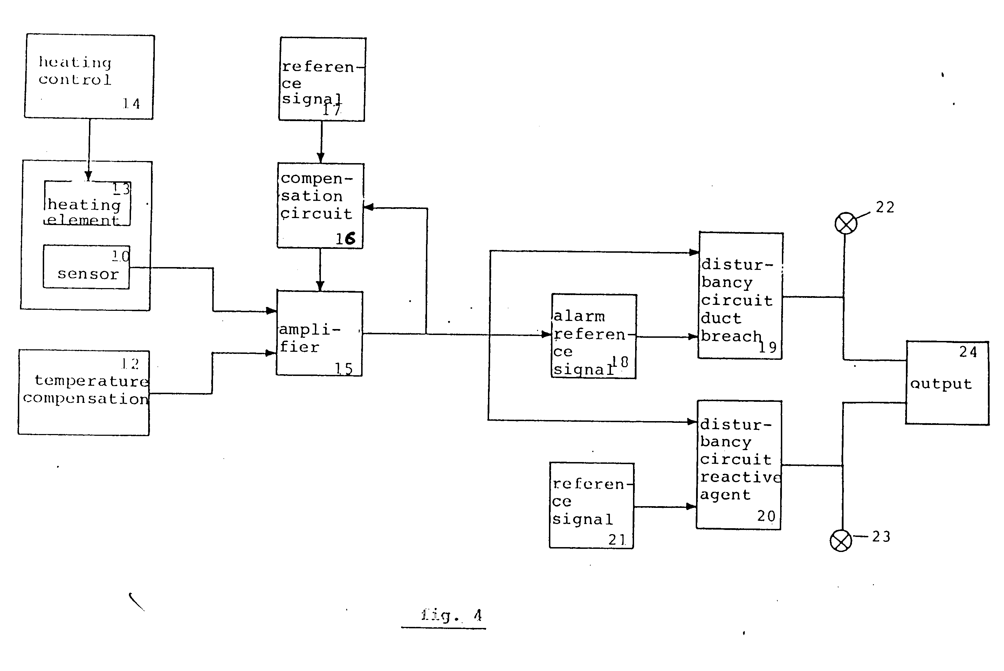

In Fig. 4 a block scheme has been shown of the signal handling circuit to which the gas sensor is connected. In Fig. 4 with 13 a heating element of the gas sensor 10 has been indicated, which is controlled by a heating control 14. The output of the sensor is connected to an amplifier 15 to which also an output of the temperature element 12 has been connected. This output is a compensation output and serves the purpose to compensate possible temperature variations in the measuring range.

Because the concentration of the reactive agent can vary due to variations in the conditions of the sucked in air or the condition of the reactive agent, a compensation circuit 16 has been connected to the control input of the amplifier 15. This compensation circuit compares the output of the amplifier with a reference signal from a reference signal source 17, which reference signal is based on normal conditions of suction and reactive agent in the suction duct. In dependence on the comparison of these two signals the amplifier 15 is adjusted so that in case of no disturbance always the same output signal is obtained. In the considered case the sensor 10 has been switched such that with decrease of the $NH_3$-concentration in the suction duct a higher output signal is issued. If by an abrupt decrease in concentration of the $NH_3$ this signal becomes so high, that the amplifier output exceeds a predetermined threshold value, the compensation circuit is switched off and this high amplifier signal remains.

The output of the amplifier 15 is connected to a first comparator 19 which forms the actual disturbance circuit for duct breach, duct clogging, and so on. Also connected to this comparator 19 is an alarm reference signal source 18 which issues an alarm reference signal, which partly is derived from the output signal of amplifier 15. In the first comparator 19 the alarm reference signal and the amplifier sensor signal are compared to each other and with exceeding of a predetermined threshold the first comparator 19 gives as output an alarm signal for duct disturbancy which at the one hand fires an alarm light 22 and on the other hand is fed to an output 24, connected to a control panel.

On the other hand the output of the amplifier is also fed to a second comparator 20, which forms a disturbance circuit for the reactive agent. To this second comparator 20 a reference signal source 21 has been connected which issues a reference signal based on "normal reactive agent". Thanks to the comparison in this second comparator at all times can be ascertained whether the reactive agent source functions sufficiently; if this is not true the second comparator issues an alarm signal at its output, which on the one hand causes an alarm light 23 to be fired and at the other hand is fed toward the output 24 to the control panel.

In the above the invention was elucidated on hand of an embodiment, in which in an effective way a smoke/gas detection system, working with ammonia, is combined with a monitoring device according the invention. It will be clear that the invention is not restricted to this special embodiment. On the one hand the invention is not bound to the specific ammonia detection devices for smoke/gas detection, but also other reactive agent sources can be applied. Moreover the invention can be used with suction systems in which smoke/gas detection does not occur by means of a reactive agent gas in which case the reactive agent source exclusively serves the purpose of the duct monitoring.

Though at this moment it is preferred to use as gas sensor the above described gas sensitive semiconductor element, it will be clear that also in other ways the concentrations of the reactive agent gas can be ascertained. Other possibilities are for instance the capability of $NH_3$ to absorb microwaves, the use of a pH-meter, measuring of the change in the conductivity of a gas stream, application of gas sensors, which work on base of catalytic oxydation, use of optical sensors wherewith colour changes are measured and such like. For the most economic and practically the easiest to be realized embodiments the indicated semi-conductor sensor is preferred however.

## Claims

1. Device for monitoring the suction duct(s) of a smoke/gas detection system,
   characterized by
   a reactive agent gas or vapour source (6) connected to the end of the suction duct(s) (4), a reactive agent sensitive sensor (10) connected to the beginning of the suction duct(s), which issues an electrical signal in dependence on the measured reactive agent concentration, and a signal handling circuit, connected to the sensor (10) and provided with an amplifier (15), which amplifies the signal of the sensor and a first comparator (19) which compares the output of the amplifier with an alarm reference signal (18) and- ,with exceeding of a predetermined threshold,issues an alarm signal.

2. Device according to claim 1, characterized in that the signal handling circuit contains a compensation circuit (16) which compares the output of the amplifier (15) with a reference signal (17), which is based on normal suction conditions for air and reactive agents and in dependence on this comparison issues a compensation signal to the control input of the amplifier.

3. Device according to claim 2, characterized in that the compensation signal is switched off when the amplifier output exceeds a predetermined threshold.

4. Device according to claim 1-3, characterized in that the signal handling circuit contains a second comparator (20), which compares the output of the amplifier (15) with a reactive agent reference signal (21) and with exceeding of a predetermined threshold issues an alarm signal for a too low reactive agent concentration.

5. Device according to claim 1-4, characterized in that the reactive agent sensitive sensor is a gas sensitive semi-conductor element, provided with a heating element (13), connected to a heating control.

6. Device according to claim 5, characterized in that the signal handling device contains a temperature compensation circuit (12), connected to the amplifier to compensate temperature variations of the semi-conductor element.

7. Device according to claim 6, characterized in that the reactive agent is ammonia gas.

8. Smoke/gas detection system with which a starting fire is detected by means of a reactive agent gas,

characterized in that this system is combined with a monitoring device according to claims 1-7, in which for the suction duct use is made of the reactive agent, which is also used for the smoke/gas detection.

**Patentansprüche**

1. Auslassüberwachungsvorrichtung der Absaugleitung(en) eines Rauch-/Gas-Detektors, **gekennzeichnet durch** ein Reagensgas oder -dampfquelle (6) verbunden mit dem Ende der Absaugleitung(en) (4), einen reagensempfindlichen Sensor (10) verbunden mit dem Beginn der Absaugleitung(en), die abhängig von der gemessenen Reagenskonzentration ein elektrisches Signal abgibt, und eine Signalverarbeitungsschaltung verbunden mit dem Sensor (10) und versehen mit einem Verstärker (15), der das Signal des Sensors verstärkt, und einen ersten Komparator (19), der den Ausgang des Verstärkers mit einem Alarmreferenzsignal (18) vergleicht und beim Überschreiten einer bestimmten Schwelle ein Alarmsignal abgibt.

2. Vorrichtung nach Anspruch 1, **dadurch gekennzeichnet**, dass die Signalverarbeitungsschaltung eine Kompensationsschaltung (16) enthält, die den Ausgang des Verstärkers (15) mit einem Referenzsignal (17) vergleicht, das auf normalen Absaugverhältnissen für Luft und Reagens basiert ist und abhängig von dieser Vergleichung ein Kompensationssignal an dem Regeleingang des Verstärkers abgibt.

3. Vorrichtung nach Anspruch 2, **dadurch gekennzeichnet**, dass das Kompensationssignal ausgeschaltet wird, wenn der Verstärkerausgang eine bestimmte Schwelle überschreitet.

4. Vorrichtung nach Anspruch 1-3, **dadurch gekennzeichnet**, dass die Signalverarbeitungsschaltung einen zweiten Komparator (20) enthält, der den Ausgang des Verstärkers (15) mit einem Reagensreferenzsignal (21) vergleicht und beim Überschreiten einer bestimmten Schwelle ein ALarmsignal für zu niedrige Reagenskonzentration abgibt.

5. Vorrichtung nach Anspruch 1-4, **dadurch gekennzeichnet**, dass der reagensempfindliche Sensor ein gasempfindliches Halbleiterelement ist, versehen mit einem Heizelement (13) verbunden mit einer Heizregelung.

6. Vorrichtung nach Anspruch 5, **dadurch gekenn-**

**zeichnet**, dass die Signalverarbeitungsvorrichtung eine Temperaturkompensationsschaltung (12) enthält, verbunden mit dem Verstärker zum Kompensieren von Temperaturschwankungen des Halbleiterelements.

7. Vorrichtung nach Anspruch 6, **dadurch gekennzeichnet**, dass das Reagens Ammoniakgas ist.

8. Rauch-/Gas-Detektor wobei ein Feuerbeginn mittels eines Reagensgases detektiert wird, **dadurch gekennzeichnet**, dass dieser Detektor mit einer Überwachungsvorrichtung nach Anspruch 1-7 kombiniert ist, wobei für die Absaugleitung das Reagens benutzt wird, das auch für die Rauch-/Gasdetektion gebraucht wird.

**Revendications**

1. Dispositif pour la surveillance du ou des conduits d'admission d'un système de détection de fumée/gaz, caractérisé par:
une source (6) d'agent réactif se présentant sous forme de gaz ou de vapeur, reliée à l'extrémité du ou des conduits d'admission (4), un capteur (10) sensible à l'agent réactif, relié au début du ou des conduits d'admission, qui envoie un signal électrique en fonction de la concentration d'agent réactif mesurée, et
un circuit de traitement de signaux, connecté au capteur (10) et pourvu d'un amplificateur (15) amplifiant le signal du capteur et d'un premier comparateur (19), qui compare le signal de sortie de l'amplificateur avec un signal d'alarme de référence (18) et qui, au-delà d'un seuil prédéterminé, envoie un signal d'alarme.

2. Dispositif selon la revendication 1, caractérisé en ce que le circuit de traitement de signaux contient un circuit de compensation (16), qui compare le signal de sortie de l'amplificateur (15) avec un signal de référence (17), basé sur des conditions d'admission normales pour l'air et des agents réactifs, et qui, en fonction de cette comparaison, envoie un signal de compensation à l'entrée de commande de l'amplificateur.

3. Dispositif selon la revendication 2, caractérisé en ce que le signal de compensation est interrompu lorsque le signal de sortie d'amplificateur dépasse un seuil prédéterminé.

4. Dispositif selon les revendications 1 à 3, caractérisé en ce que le circuit de traitement de signaux contient un second comparateur (20), qui compare le signal de sortie de l'amplificateur (15) avec un signal de référence (21) d'agent réactif, et qui, au-delà d'un seuil prédéterminé, envoie un signal d'alarme pour une concentration d'agent réactif trop faible.

5. Dispositif selon les revendications 1 à 4, caractérisé en ce que le capteur sensible à l'agent réactif est un élément semi-conducteur sensible au gaz, pourvu d'un élément de chauffage (13) relié à une commande de chauffage.

6. Dispositif selon la revendication 5, caractérisé en ce que le dispositif de traitement de signaux contient un circuit de compensation de température (12) connecté à l'amplificateur, pour compenser des variations de température de l'élément semi-conducteur.

7. Dispositif selon la revendication 6, caractérisé en ce que l'agent réactif est du gaz ammoniac.

8. Système de détection de fumée/gaz grâce auquel un début d'incendie est détecté au moyen d'un gaz d'agent réactif, caractérisé en ce que le système est combiné avec un dispositif de surveillance selon les revendications 1 à 7, dans lequel on utilise, pour le conduit d'admission, l'agent réactif, qui est également utilisé pour la détection de fumée/gaz.

fig.1

reactive agent

$NH_3$

suction duct

sampling point

sensor for concentratio
measurement and duct
breach

detector

blower

manifold

blower case

fig. 2

fig. 3

fig. 4